# FASCICULE DE BREVET EUROPEEN

(11) **EP 3 325 777 B1**
(45) Date de publication et mention de la délivrance du brevet: **19.06.2019**
(21) Numéro de dépôt: 16745805.8
(22) Date de dépôt: 20.07.2016
(51) Int. Cl.: F01D 9/04, F01D 9/02, F01D 5/18

(54) **AUBAGE DE DISTRIBUTEUR HAUTE PRESSION AVEC UN INSERT À GÉOMÉTRIE VARIABLE**
BESCHAUFELUNG EINES HOCHDRUCKVERTEILERS MIT EINEM EINSATZ MIT VARIABLER GEOMETRIE
HIGH-PRESSURE DISTRIBUTOR BLADING HAVING A VARIABLE-GEOMETRY INSERT

(30) Priorité: 20.07.2015 FR 1556860
(43) Date de publication de la demande: 30.05.2018
(73) Titulaire: Safran Helicopter Engines, 64510 Bordes (FR)
(72) Inventeur: PARDO, Frédéric, Philippe, Jean-Jacques, 77550 Moissy-Cramayel (FR); VERRON, Guilhem, 77550 Moissy-Cramayel (FR)
(74) Mandataire: Regimbeau
(86) Numéro de dépôt international: PCT/FR2016/051866
(87) Numéro de publication internationale: WO 2017/013354

(56) Documents cités:
- EP-A1- 0 919 698
- EP-A1- 2 792 850
- EP-A2- 1 284 338
- EP-A2- 2 228 517
- FR-A1- 2 998 496
- US-A1- 2014 105 726

## Description

### DOMAINE DE L'INVENTION

L'invention concerne le domaine général des turbomachines à simple ou double flux, et plus particulièrement le refroidissement des aubages des distributeurs ventilés.

### ARRIERE-PLAN TECHNOLOGIQUE

Une turbomachine 1 comporte typiquement une nacelle ou entrée d'air (plénum) qui forme une ouverture pour l'admission d'un flux déterminé d'air vers le moteur proprement dit. Généralement, la turbomachine comprend une ou plusieurs sections de compression 4 de l'air admis dans le moteur (généralement une section basse pression et une section haute pression). L'air ainsi comprimé est admis dans la chambre de combustion 5 et mélangé avec du carburant avant d'y être brûlé.

Les gaz de combustion chauds issus de cette combustion sont ensuite détendus dans différents étages de turbine 6, 7. Une première détente est faite dans un étage à haute pression 6 immédiatement en aval de la chambre et qui reçoit les gaz à la température la plus élevée. Les gaz sont détendus à nouveau en étant guidés à travers les étages de turbine dits à basse pression 7.

Une turbine, haute pression 6 ou basse pression 7, comporte classiquement un ou plusieurs étages, chacun étant constitué d'une rangée d'aubages de turbine fixes, aussi appelée distributeur 8, suivie d'une rangée d'aubages mobiles de turbine espacées circonférentiellement tout autour du disque de la turbine. Le distributeur 8 dévie et accélère le flux de gaz issu de la chambre de combustion vers les aubages mobiles de turbine à un angle et une vitesse appropriés afin d'entraîner en rotation ces aubages mobiles et le disque de la turbine.

Le distributeur 8 comprend une pluralité d'aubages disposés radialement par rapport à un axe X de rotation de la turbomachine reliant un élément annulaire radialement interne (ou plateforme interne) et un élément annulaire radialement externe (ou plateforme externe). L'ensemble forme une veine annulaire en regard des aubages mobiles de la turbine.

Plus précisément, le distributeur 8 est formé d'aubages fixes disposés en une couronne qui peut, le cas échéant, être divisée en une pluralité de segments répartis circonférentiellement autour de l'axe X de la turbomachine. Chaque segment comprend un ou plusieurs aubages fixes adjacents solidaires d'un élément en secteur d'anneau ainsi qu'un moyen de retenue amont et un moyen de retenue aval. Ici, l'amont et l'aval sont définis par le sens d'écoulement des gaz dans la turbomachine.

Les aubages de distributeur 8 sont généralement obtenus de fonderie et sont réalisés dans un superalliage à base de nickel ou de matériau monocristallin qui présente une très bonne tenue thermique.

Les distributeurs 8 des turbines haute pression 6 de turbomachine sont des pièces exposées à de très fortes contraintes thermiques. Ils sont en effet placés à la sortie de la chambre de combustion et sont donc traversés par des gaz extrêmement chaud qui les soumettent à de très fortes sollicitations thermiques, la température des gaz en sortie de chambre de combustion étant largement supérieure à la température de fusion des matériaux constituant le distributeur 8. La température de veine à l'entrée du distributeur 8 peut en effet atteindre localement 2000°C, alors qu'il n'est pas rare d'observer en certains points des endommagements importants de la pièce dont la température de fusion est inférieure à 1400°C.

Afin de diminuer la température de la pièce et de limiter sa dégradation, un refroidissement des distributeurs 8 est donc nécessaire. Habituellement, la fonction de refroidissement des distributeurs 8 est assurée par un ou plusieurs inserts placés à l'intérieur des aubages de distributeur 8. Un insert est une pièce de tôlerie ou de fonderie creuse comprenant des perçages cylindriques formés généralement à l'aide d'un laser et épousant au mieux la forme de l'aubage à refroidir. De l'air « frais » prélevé au niveau du compresseur de la turbomachine impacte par ces perçages la face interne de l'aubage pour la refroidir.

La face interne de l'aubage est ainsi refroidie par des impacts de jets et un phénomène de convection forcée entre l'insert et la paroi du profil. La distance entre l'insert et la face interne de l'aubage, appelé l'entrefer, est de fait constante.

Cependant, deux phénomènes gouvernent le refroidissement de l'aubage, à savoir les impacts de jets et la convection forcée entre l'insert et la face interne de l'aubage. Un des paramètres prépondérants dans l'efficacité de refroidissement de ces deux modes est la valeur de l'entrefer. En effet, l'entrefer doit être minimal si l'on souhaite maximiser la convection forcée, mais il ne doit pas être trop faible si l'on souhaite maximiser la hauteur d'impact des jets (qui correspond à la distance entre la sortie d'un perçage et la paroi interne de l'aubage) afin d'optimiser l'efficacité des impacts de jets.

Actuellement, l'entrefer étant constant, un compromis est fait sur la sa valeur afin de ne pas dégrader trop fortement les impacts de jet au profit d'une convection forcée efficace.

Les performances d'une turbomachine sont cependant en partie liées au système de ventilation mis en place. En effet, tous les prélèvements d'air effectués pour refroidir les composants pénalisent le cycle thermodynamique de la turbomachine, dégradant la puissance et la consommation spécifique du moteur. Il est donc nécessaire de limiter au strict minimum nécessaire les prélèvements d'air. L'efficacité des systèmes de refroidissement utilisés est donc primordiale pour les performances du moteur et la durée de vie du composant concerné.

Le document EP 2 228 517 décrit un aubage de distributeur d'une turbomachine une aube et un insert logé dans l'aube dans lequel sont formés des orifices. La paroi de l'insert est en outre localement pliée au niveau des orifices afin de croiser leur jet d'air et de créer des turbulences.

Le document EP 1 284 338 décrit quant à lui un aubage de distributeur d'une turbomachine une aube et un insert logé dans l'aube dans lequel sont formés des orifices. La paroi de l'insert est discontinue de manière à former des chevauchements et à modifier la direction d'impact des jets d'air envoyés par les orifices sur la face interne de l'aube.

### RESUME DE L'INVENTION

Un objectif de l'invention est donc d'optimiser le refroidissement des aubages de distributeurs afin de limiter les quantités d'air frais utilisées, l'objectif final étant la limitation des endommagements thermomécaniques (criques, brulures, oxydation, etc.).

Pour cela, l'invention propose un aubage de distributeur d'une turbomachine, ledit aubage présentant :
- une aube comprenant une paroi d'intrados et une paroi d'extrados, et
- un insert logé entre la paroi d'intrados et la paroi d'extrados, l'insert comprenant :
   * une paroi fermée présentant une peau externe s'étendant en regard de la paroi d'intrados et de la paroi d'extrados et une peau interne, opposée à la peau externe, la peau externe de la paroi fermée et la paroi de l'aube en regard étant séparées par un entrefer, et
   * une série d'orifices traversants, formés dans la paroi fermée entre la peau externe et la peau interne.

L'insert de l'aubage comprend une série de renfoncements de forme globalement hémisphérique, en tête d'oeuf ou en goutte d'eau, formés dans la paroi fermée et débouchant dans la peau externe. Les orifices traversants sont par ailleurs formés dans lesdits renfoncements et les hauteurs d'impact entre lesdits orifices traversants et la paroi d'intrados ou la paroi d'extrados en regard sont plus grandes que l'entrefer.

Certaines caractéristiques préférées mais non limitatives de l'aubage décrit ci-dessus sont les suivantes, prises individuellement ou en combinaison :
- les orifices traversants présentent une périphérie ayant une largeur maximale définie, un rapport entre la hauteur d'impact et la largeur maximale de tout ou partie des orifices traversants étant compris entre 2.5 et 10, de préférence entre 2.5 et 7, plus préférentiellement entre 2.5 et 5, typiquement entre 2.8 et 3.2, par exemple égale à 3,
- les orifices traversants sont circulaires, la largeur maximale desdits orifices traversants correspondant à leur diamètre,
- la peau interne de la paroi fermée de l'insert comprend en outre des renflements, les orifices traversants débouchant dans lesdits renflements,
- la hauteur d'impact est comprise entre 1.0 mm et 3.0 mm, de préférence entre 1 mm et 2 mm, typiquement entre 1 mm et 1.5 mm,
- l'entrefer est compris entre 0.5 mm et 1.0 mm, de préférence entre 0.5 mm et 0.8 mm, et typiquement égal à 0.6 mm, et/ou
- une face interne de la paroi d'intrados et de la paroi d'extrados comprend en outre des plots faisant saillie de ladite face interne en direction de la peau externe de l'insert.

Selon un deuxième aspect, l'invention propose également un distributeur pour une turbine d'une turbomachine comprenant une plateforme annulaire interne et une plateforme annulaire externe coaxiales autour d'un axe ainsi qu'une série d'aubages de distributeur comme décrites ci-dessus, lesdites aubages étant réparties circonférentiellement autour de l'axe entre la plateforme interne et la plateforme externe.

Selon un troisième aspect, l'invention propose un procédé de fabrication d'un aubage de distributeur comme décrit ci-dessus, dans lequel l'insert est réalisé par fusion sélective sur un lit de poudre par faisceau de haute énergie.

### BREVE DESCRIPTION DES DESSINS

D'autres caractéristiques, buts et avantages de la présente invention apparaîtront mieux à la lecture de la description détaillée qui va suivre, et au regard des dessins annexés donnés à titre d'exemples non limitatifs et sur lesquels :
La figure 1 est une vue en perspective d'un exemple de réalisation d'un insert d'un aubage de distributeur conforme à l'invention,
La figure 2 est une vue de côté d'un exemple de réalisation d'un aubage de distributeur conforme à l'invention comprenant l'insert de la figure 1, sur laquelle l'insert est représenté en transparence à l'intérieur de la aube,
La figure 3 est une vue partielle d'un exemple de réalisation d'un aubage de distributeur conforme à l'invention,
La figure 4 est une vue en perspective d'un exemple de réalisation d'un distributeur conforme à l'invention et

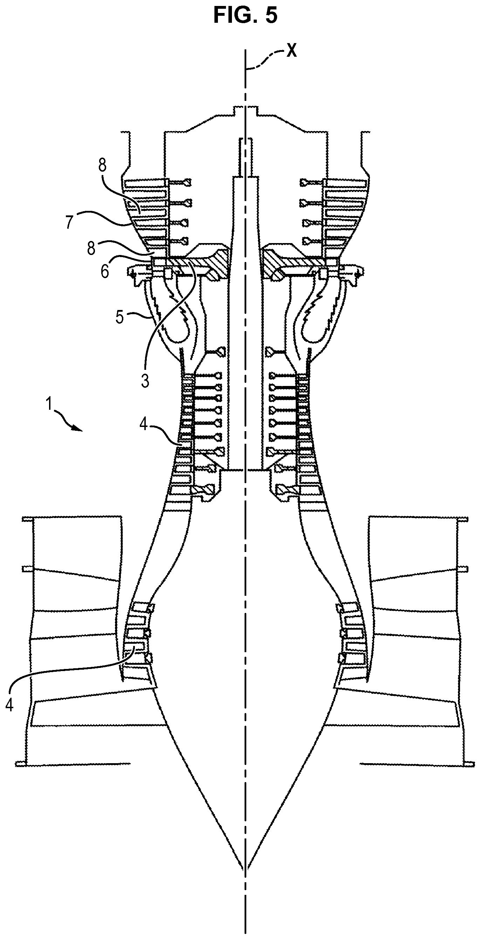

La figure 5 est une vue en coupe simplifiée d'un exemple de réalisation d'une turbomachine comprenant un distributeur conforme à l'invention.

### DESCRIPTION DETAILLEE D'UN MODE DE REALISATION

L'invention va être décrite tout particulièrement en référence à une turbine haute pression 6 mono-étage, comprenant donc un distributeur haute pression 8 (ou stator) et une roue mobile (ou rotor). Ceci n'est cependant pas limitatif, dans la mesure où la turbine 6 pourrait comprendre davantage d'étages et que l'invention trouve également aussi bien application dans une turbine basse pression 7 que dans un compresseur 4 (haute ou basse pression), qui comprennent également chacun plusieurs étages fixes. Par ailleurs, le distributeur 8 peut être monobloc ou sectorisé.

La turbine 6 comporte classiquement un ou plusieurs étages, chacun étant constitué d'un distributeur 8, suivi d'une rangée d'aubes mobiles 3 de turbine espacées circonférentiellement tout autour du disque de la turbine 6.

Le distributeur 8 dévie le flux de gaz issus de la chambre de combustion 5 vers les aubes mobiles à un angle et une vitesse appropriés afin d'entraîner en rotation les aubes et le disque de la turbine 6. Ce distributeur 8 comprend une pluralité d'aubages fixes disposées radialement par rapport à l'axe X de rotation de la turbomachine 1 reliant une plateforme annulaire radialement interne 9a et une plateforme annulaire radialement externe 9b.

Chaque aubage 10 comprend une aube 12 comportant une paroi d'intrados 16 et une paroi d'extrados 14 reliées entre elles par un bord d'attaque 18 et un bord de fuite 19. Le bord d'attaque 18 d'une aube 12 correspond à la partie antérieure de son profil aérodynamique. Il fait face au flux de gaz et le divise en un écoulement d'air intrados qui longe la paroi d'intrados 16 et en un écoulement d'air extrados qui longe la paroi d'extrados 14. Le bord de fuite 19 quant à lui correspond à la partie postérieure du profil aérodynamique, où se rejoignent les écoulements intrados et extrados.

Le distributeur 8 comprend en outre un système de refroidissement. A cet effet, chaque aubage 10 comprend un insert 20 logé dans l'aube 12 entre la paroi d'intrados 16 et la paroi d'extrados 14. L'insert 20 comprend :
- une paroi fermée 12 présentant une peau externe 24 s'étendant en regard de la paroi d'intrados 16 et de la paroi d'extrados 14 et une peau interne 26, opposée à la peau externe 24, la peau externe 24 de la paroi fermée 12 et la paroi de l'aubage 10 en regard étant séparées par un entrefer 30, et
- une série d'orifices traversants 28, formés dans la paroi fermée 12 entre la peau externe 24 et la peau interne 26.

Une série de renfoncements 25, qui débouchent dans la peau externe 24, sont en outre formés dans la paroi fermée 12 de l'insert 20. Les orifices traversants 28 sont formés dans les renfoncements 25 et les hauteurs d'impact h entre les orifices traversants 28 et la paroi en regard de l'aube 12 sont plus grandes que l'entrefer 30.

Dans une forme de réalisation, l'entrefer peut être constant. Par entrefer 30, on comprendra ici la plus petite distance entre un point la peau externe 24 de la paroi fermée 12 de l'insert 20, autour des renfoncements 25, et la paroi en regard de l'aube 12, c'est-à-dire la paroi d'intrados 16 ou la paroi d'extrados 14. L'entrefer 30 est mesuré dans un plan parallèle au plan tangent à la plateforme interne 9a au niveau du pied de l'aube 12, et est globalement constant entre la plateforme interne 9a et la plateforme externe 9b.

Par hauteur d'impact h, on comprendra la distance entre la sortie (par rapport au sens d'écoulement du flux d'air de refroidissement) de l'orifice traversant 28 et la face interne 15 de la paroi en regard de l'aube 12, c'est-à-dire la paroi d'intrados 16 ou la paroi d'extrados 14, suivant l'axe X d'écoulement de l'air de refroidissement dans l'orifice traversant 28.

Cette configuration de l'aubage 10 permet à la fois d'assurer un faible entrefer 30 entre l'aube 12 et l'insert 20, et donc de maintenir l'efficacité de la convection forcée lors de l'évacuation de l'air après impact à travers les orifices traversants 28, tout en améliorant l'efficacité d'impact grâce à la hauteur d'impact h accrue par les renfoncements 25 qui décalent la sortie des orifices traversants 28 par rapport à la peau externe 24 de l'insert 20.

Dans une forme de réalisation, la hauteur d'impact h est comprise entre 1.0 mm et 3.0 mm, de préférence entre 1.0 et 2.0 mm, par exemple environ 1.5 mm, lorsque l'entrefer 30 est compris entre 0.5 et 1.0 mm, de préférence entre 0.5 et 0.8 mm, par exemple de l'ordre de 0.6 mm.

Les orifices traversants 28 présentent une périphérie ayant une largeur L maximale définie. Par largeur L de périphérie, on comprendra ici la distance entre deux droites parallèles (ou « lignes d'appui) qui sont tangentes en deux points distincts à la courbe fermée formée par la périphérie de l'orifice traversant 28 au niveau du renfoncement. La largeur L maximale correspond alors à la plus grande largeur L de la périphérie. Lorsqu'un orifice traversant 28 présente une section circulaire, la largeur L maximale est par exemple égale au diamètre externe du cercle. En variante, l'orifice traversant 28 peut être de section carrée ou rectangulaire, la largeur L maximale correspondant alors à sa diagonale.

Afin d'optimiser encore l'efficacité d'impact des jets sur la face interne 15 de l'aube 12, le rapport entre la hauteur d'impact h et la largeur L maximale de tout ou partie des orifices est compris entre 2.5 et 10, de préférence entre 2.5 et 5, typiquement entre 2.5 et 5, par exemple entre 2.8 et 3.2. Typiquement, dans le cas d'une aube 12 dont la paroi fermée 12 présente une épaisseur comprise entre 0.4 et 0.6 mm avec un entrefer 30 sensiblement égal à 0.6 mm, le rapport optimal entre la hauteur d'impact h et la largeur L maximale des orifices est de l'ordre de 3. Un tel rapport permet notamment d'obtenir une distance d'impact de 1.5 mm.

Les renfoncements 25 peuvent présenter une forme globalement hémisphérique ou « en tête d'oeuf » ou goutte d'eau. On notera que, selon la hauteur d'impact h recherchée et l'épaisseur de la paroi externe, la peau interne 26 de l'insert 20 peut ne pas être plane.

Une telle forme permet en outre d'attendre de tels rapports d'hauteur d'impact h sur largeur maximale L.

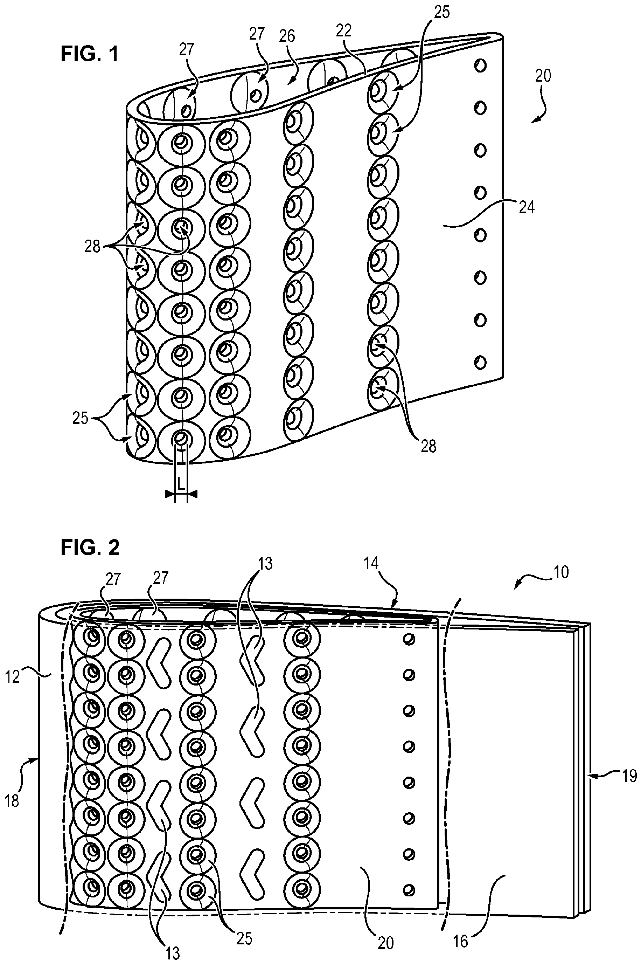

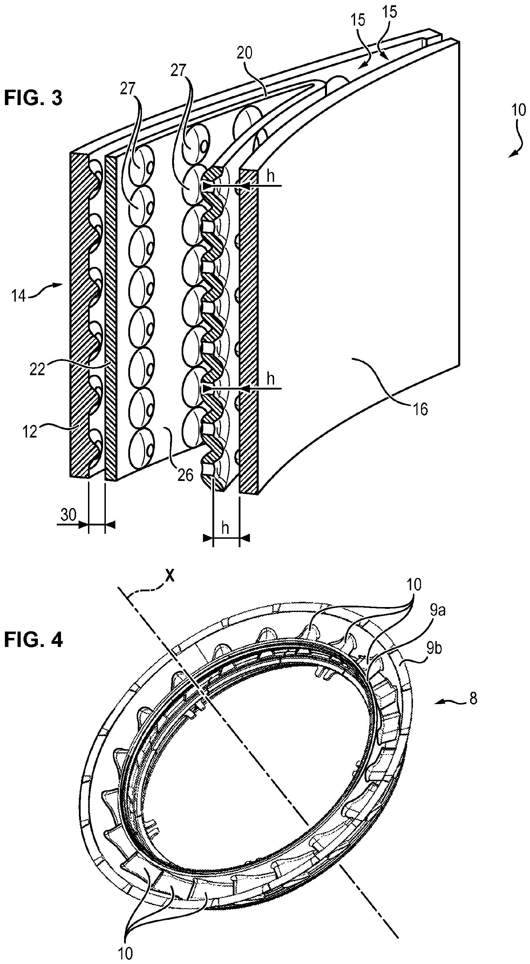

Ainsi, dans l'exemple de réalisation illustré sur les figures 1 à 3, l'entrefer 30 est de 0.6 mm, la paroi fermée de l'aube 12 présente une épaisseur de l'ordre de 0.6 mm tandis que la hauteur d'impact h recherchée est de 1.5 mm. Les renfoncements 25 sont donc obtenus par modification de la géométrie de la peau interne 26 et de la peau externe 24 de la paroi fermée 12, et non en réalisant une cavité dans ladite paroi externe. La peau interne 26 de la paroi fermée 12 n'est donc pas lisse est comprend des renflements 27 correspondant aux renfoncements 25 formés dans la peau externe 24. Ici, les renfoncements 25 sont hémisphériques : la peau externe 24 de la paroi fermée 12 présente donc une série de creux hémisphériques au fond desquels sont réalisés les orifices traversants 28, tandis que sa peau interne 26 présente des renflements 27 hémisphériques de forme et de taille complémentaire qui font saillie de ladite peau interne 26, les orifices traversants 28 débouchant du sommet desdits renflements 27.

Dans une variante de réalisation, la face interne 15 de la paroi d'intrados 14 et de la paroi d'extrados 16 de l'aube 12 peut comprendre des plots 13 faisant saillie de ladite face interne 15 en direction de l'insert 20, afin de protéger le jet impactant la face interne 15 de l'aube 12 contre l'écoulement cisaillant. Les plots 13 peuvent par exemple présenter une section globalement triangulaire ou en V, une pointe de la section s'étendant en direction du bord d'attaque 18 de l'aube 12.

Cette variante de réalisation, couplée avec la largeur L maximale L et la hauteur d'impact h optimales, permet d'obtenir un refroidissement efficace et constant sur tout le profil de l'aube 12.

La configuration de l'insert 20 et, le cas échéant, la réalisation de plots 13 sur la face interne 15 de l'aube 12, apporte un gain significatif sur l'efficacité locale d'impact du refroidissement du distributeur 8 et la possibilité de gérer l'efficacité de la convection forcée dans l'entrefer 30 tout en limitant le cisaillement des rangées aval d'impacts par celles situées plus en amont. L'optimisation de tous ces paramètres permet en outre d'exploiter au mieux l'air utilisé pour refroidir la paroi. Ceci permet à iso-débit d'être plus efficace thermiquement (gain en durée de vie) ou de réduire le débit à iso-efficacité thermique, ce qui se traduit par un gain en performance du moteur.

L'aube 12 peut être obtenue de manière conventionnelle, par exemple par fonderie dans un matériau adapté tel qu'un superalliage à base de nickel ou de matériau monocristallin qui présente une très bonne tenue thermique. En variante, l'aube 12 peut être obtenue par fusion sélective sur un lit de poudre par faisceau de haute énergie.

L'insert quant à lui peut par exemple être obtenu par fonderie ou par fusion sélective sur un lit de poudre par faisceau de haute énergie. La fusion sélective sur un lit de poudre par faisceau de haute énergie permet en particulier d'obtenir un insert pour un moindre coût (en comparaison avec la fonderie) réalisant des renfoncements 25 (et le cas échéant des renflements 27) de forme adaptée. La paroi externe de l'insert peut alors présenter une épaisseur comprise entre 0.4 et 0.8 mm, par exemple d'environ 0.6 mm, voire 0.4 mm.

## Revendications

1. Aubage (10) de distributeur (8) d'une turbomachine (1), ledit aubage (10) présentant :
- une aube (12) comprenant une paroi d'intrados (16) et une paroi d'extrados (14), et
- un insert (20) logé entre la paroi d'intrados (16) et la paroi d'extrados (14), l'insert (20) comprenant :
* une paroi fermée (22) présentant une peau externe (24) s'étendant en regard de la paroi d'intrados (16) et de la paroi d'extrados (14) et une peau interne (26), opposée à la peau externe (24), la peau externe (24) de la paroi fermée (22) et la paroi de l'aube (12) en regard étant séparées par un entrefer (30), et
* une série d'orifices traversants (28), formés dans la paroi fermée (22) entre la peau externe (24) et la peau interne (26), et
* une série de renfoncements (25) formés dans la paroi fermée (22) et débouchant dans la peau externe (24), les orifices traversants (28) étant formés dans lesdits renfoncements (25), les hauteurs d'impact (h) entre lesdits orifices traversants (28) et la paroi d'intrados (16) ou la paroi d'extrados (14) en regard étant plus grandes que l'entrefer (30),
l'aubage étant **caractérisé en ce que** les renfoncements (25) présentent une forme globalement hémisphérique, en tête d'oeuf ou en goutte d'eau.

2. Aubage (10) selon la revendication 1, dans lequel les orifices traversants (28) présentent une périphérie ayant une largeur (L) maximale définie, un rapport entre la hauteur d'impact (h) et la largeur (L) maximale de tout ou partie des orifices traversants (28) étant compris entre 2.5 et 10, de préférence entre 2.5 et 7, plus préférentiellement entre 2.5 et 5, typiquement entre 2.8 et 3.2, par exemple égale à 3.

3. Aubage (10) selon la revendication 2, dans lequel les orifices traversants (28) sont circulaires, la largeur (L) maximale desdits orifices traversants (28) correspondant à leur diamètre.

4. Aubage (10) selon l'une des revendications 1 à 3, dans lequel la peau interne (26) de la paroi fermée (22) de l'insert (20) comprend en outre des renflements (27), les orifices traversants (28) débouchant dans lesdits renflements (27).

5. Aubage (10) selon l'une des revendications 1 à 4, dans lequel la hauteur d'impact (h) est comprise entre 1.0 mm et 3.0 mm, de préférence entre 1 mm et 2 mm, typiquement entre 1 mm et 1.5 mm.

6. Aubage (10) selon l'une des revendications 1 à 5, dans lequel l'entrefer (30) est compris entre 0.5 mm et 1.0 mm, de préférence entre 0.5 mm et 0.8 mm, et typiquement égal à 0.6 mm.

7. Aubage (10) selon l'une des revendications 1 à 6, dans lequel une face interne (15) de la paroi d'intrados (16) et de la paroi d'extrados (14) comprend en outre des plots (13) faisant saillie de ladite face interne (15) en direction de la peau externe (24) de l'insert (20).

8. Distributeur (8) d'une turbomachine (1) comprenant une plateforme annulaire interne (9a) et une plateforme annulaire externe (9b) coaxiales autour d'un axe (X) du distributeur (8),
le distributeur (8) étant **caractérisé en ce qu'**il comprend une série d'aubages (10) de distributeur (8) selon l'une des revendications 1 à 7 répartis circonférentiellement autour de l'axe (X) entre la plateforme interne (9) et la plateforme externe (9b).

9. Procédé de fabrication d'un aubage (10) de distributeur (8) selon l'une des revendications 1 à 7, **caractérisé en ce que** l'insert (20) est réalisé par fusion sélective sur un lit de poudre par faisceau de haute énergie.

## Patentansprüche

1. Beschaufelung (10) für Verteiler (8) eines Turbinentriebwerks (1), wobei die Beschaufelung (10) Folgendes aufweist:
- eine Schaufel (12), die eine Flügelunterseitenwand (16) und eine Flügeloberseitenwand (14) umfasst, und
- einen Einsatz (20), der zwischen der Flügelunterseitenwand (16) und der Flügeloberseitenwand (14) untergebracht ist, wobei der Einsatz (20) Folgendes umfasst:
* eine geschlossene Wand (22), die eine Außenhaut (24), die sich der Flügelunterseitenwand (16) und der Flügeloberseitenwand (14) gegenüberliegend erstreckt, und eine Innenhaut (26) aufweist, die der Außenhaut (24) entgegengesetzt ist, wobei die Außenhaut (24) der geschlossenen Wand (22) und die Wand der Schaufel (12) gegenüberliegend durch einen Spalt (30) getrennt sind, und
* eine Reihe von Durchgangsöffnungen (28), die in der geschlossenen Wand (22) zwischen der Außenhaut (24) und der Innenhaut (26) gebildet sind, und
* eine Reihe von Verstärkungen (25), die in der geschlossenen Wand (22) gebildet sind und in die Außenhaut (24) münden, wobei die Durchgangsöffnungen (28) in den Verstärkungen (25) gebildet sind, wobei die Auftreffhöhen (h) zwischen den Durchgangsöffnungen (28) und der Flügelunterseitenwand (16) oder der Flügeloberseitenwand (14) gegenüberliegend größer sind als der Spalt (30),
wobei die Beschaufelung **dadurch gekennzeichnet ist, dass** die Verstärkungen (25) eine allgemeine Halbkreis-, Eierkopf- oder Wassertropfenform aufweisen.

2. Beschaufelung (10) nach Anspruch 1, wobei die Durchgangsöffnungen (28) einen Umfang aufweisen, der eine definierte Höchstbreite (L) aufweist, wobei ein Verhältnis zwischen der Auftreffhöhe (h) und der Höchstbreite (L) von allen oder einem Teil der Durchgangsöffnungen (28) zwischen 2,5 und 10, vorzugsweise zwischen 2,5 und 7, noch mehr zu bevorzugen zwischen 2,5 und 5, typischerweise zwischen 2,8 und 3,2, zum Beispiel gleich 3, enthalten ist.

3. Beschaufelung (10) nach Anspruch 2, wobei die Durchgangsöffnungen (28) kreisförmig sind, wobei die Höchstbreite (L) der Durchgangsöffnungen (28) ihrem Durchmesser entspricht.

4. Beschaufelung (10) nach einem der Ansprüche 1 bis 3, wobei die Innenhaut (26) der geschlossenen Wand (22) des Einsatzes (20) ferner Ausbaubuchungen (27) umfasst, wobei die Durchgangsöffnungen (28) in die Ausbauchungen (27) münden.

5. Beschaufelung (10) nach einem der Ansprüche 1 bis 4, wobei die Auftreffhöhe (h) zwischen 1,0 mm und 3,0 mm, vorzugsweise zwischen 1 mm und 2 mm, typischerweise zwischen 1 mm und 1,5 mm enthalten ist.

6. Beschaufelung (10) nach einem der Ansprüche 1 bis 5, wobei der Spalt (30) zwischen 0,5 mm und 1,0 mm, vorzugsweise zwischen 0,5 mm und 0,8 mm enthalten ist und typischerweise gleich 0,6 mm ist.

7. Beschaufelung (10) nach einem der Ansprüche 1 bis 6, wobei eine Innenfläche (15) der Flügelunterseitenwand (16) und der Flügeloberseitenwand (14) ferner Kontaktstücke (13) umfasst, die von der Innenfläche (15) in Richtung der Außenhaut (24) des Einsatzes (20) hervorstehen.

8. Verteiler (8) eines Turbinentriebwerks (1), der eine ringförmige Innenplattform (9a) und eine ringförmige Außenplattform (9b) umfasst, die um eine Achse (X) des Verteilers (8) koaxial sind,
wobei der Verteiler (8) **dadurch gekennzeichnet ist, dass** er eine Reihe von Beschaufelungen (10) eines Verteilers (8) nach einem der Ansprüche 1 bis 7 umfasst, die in Umfangsrichtung um die Achse (X) zwischen der Innenplattform (9) und der Außenplattform (9b) verteilt sind.

9. Verfahren zur Herstellung einer Beschaufelung (10) eines Verteilers (8) nach einem der Ansprüche 1 bis 7, **dadurch gekennzeichnet, dass** der Einsatz (20) durch selektives Schmelzen durch einen Hochenergiestrahl auf einem Pulverbett hergestellt wird.

## Claims

1. A distributor (8) blading (10) for a turbine engine (1), said blading (10) having:
- a blade (12) comprising a pressure surface wall (16) and a suction surface wall (14), and
- an insert (20) housed between the pressure surface wall (16) and the suction surface wall (14), the insert (20) comprising:
* a closed wall (22) having an outer skin (24) extending opposite the pressure surface wall (16) and the suction surface wall (14) and an inner skin (26), opposite to the outer skin (24), the outer skin (24) of the closed wall (22) and the wall of the blade (12) facing each other being separated by an air gap (30), and
* a series of through-holes (28) formed in the closed wall (22) between the outer skin (24) and the inner skin (26), and
* a series of depressions (25) formed in the closed wall (22) and opening into the outer skin (24), the through-holes (28) being formed in said depressions (25), the impact heights (h) between said through-holes (28) and the pressure surface wall (16) or the suction surface wall (14) facing each other being larger than the air gap (30),
the blading being **characterized in that** the depressions (25) have a globally hemispherical shape, an egghead shape or a water drop shape.

2. The blading (10) according to claim 1, wherein the through-holes (28) have a periphery with a defined maximum width (L), a ratio between the impact height (h) and the maximum width (L) of all or part of the through-holes (28) ranging between 2.5 and 10, preferably between 2.5 and 7, more preferably between 2.5 and 5, typically between 2.8 and 3.2, for example equal to 3.

3. The blading (10) according to claim 2, wherein the through-holes (28) are circular, the maximum width (L) of said through-holes (28) corresponding to their diameter.

4. The blading (10) according to any one of claims 1 to 3, wherein the inner skin (26) of the closed wall (22) of the insert (20) further comprises bulges (27), the through-holes (28) opening into said bulges (27).

5. The blading (10) according to any one of claims 1 to 4, wherein the impact height (h) is comprised between 1.0 mm and 3.0 mm, preferably between 1 mm and 2 mm, typically between 1 mm and 1.5 mm.

6. The blading (10) according to any one of claims 1 to 5, wherein the air gap (30) is comprised between 0.5 mm and 1.0 mm, preferably between 0.5 mm and 0.8 mm, and typically equal to 0.6 mm.

7. The blading (10) according to any one of claims 1 to 6, wherein an inner face (15) of the pressure surface wall (16) and of the suction surface wall (14) further comprises studs (13) protruding from said inner face (15) towards the outer skin (24) of the insert (20).

8. A distributor (8) for a turbine engine (1) comprising an inner annular platform (9a) and an outer annular platform (9b) coaxial about an axis (X) of the distributor (8),
the distributor (8) being **characterized in that** it comprises a series of distributor (8) bladings (10) according to any one of claims 1 to 7 distributed circumferentially about the axis (X) between the inner platform (9) and the outer platform (9b).

9. A method for manufacturing a distributor (8) blading (10) according to any one of claims 1 to 7, **characterized in that** the insert (20) is made by selective melting on a powder bed through high energy beam.
